# EUROPEAN PATENT SPECIFICATION

(11) **EP 3 370 988 B1**
(45) Date of publication and mention of the grant of the patent: **10.08.2022**
(21) Application number: 16812848.6
(22) Date of filing: 31.10.2016
(51) Int. Cl.: B60K 13/04, B60K 15/03

(54) **ELECTRIC HEATER DEVICE, IN PARTICULAR FOR VEHICLES**
ELEKTRISCHE HEIZVORRICHTUNG, INSBESONDERE FÜR FAHRZEUGE
DISPOSITIF DE CHAUFFAGE ÉLECTRIQUE, EN PARTICULIER POUR VÉHICULES

(30) Priority: 06.11.2015 IT UB20154867
(43) Date of publication of application: 12.09.2018
(73) Proprietor: Eltek S.p.A., 15033 Casale Monferrato (AL) (IT)
(72) Inventor: BARBANO, Alberto, I-15033 Casale Monferrato (Alessandria) (IT); BIZZARRO, Marco, I-15033 Casale Monferrato (Alessandria) (IT); ZORZETTO, Mauro, I-15033 Casale Monferrato (Alessandria) (IT); PIZZI, Marco, I-15033 Casale Monferrato (Alessandria) (IT); MERLANO, Piercarlo, I-15033 Casale Monferrato (Alessandria) (IT)
(74) Representative: Gallarotti, Franco
(86) International application number: PCT/IB2016/056558
(87) International publication number: WO 2017/077447

(56) References cited:
- EP-A1- 1 070 944
- EP-A1- 2 650 497
- EP-A2- 2 336 515
- WO-A1-2011/141502
- DE-A1-102009 028 113
- DE-A1-102010 038 361
- DE-U1-202013 010 565
- JP-A- 2001 281 190

## Description

### Field of the invention

The present invention relates to electric heater devices, in particular to heating devices associated to or integrated in components of vehicles, such as heaters for tanks, or ones used for heating substances subject to freezing. The invention has been developed with particular reference to heating devices and components for tanks that are to contain a liquid additive, or a reducing agent, necessary for operation of a system for treatment of the exhaust gases of an internal-combustion engine. The heating devices according to the invention may, however, find application also in contexts other than the preferential one referred to herein.

### Prior art

Systems for emission of exhaust gases of some types of vehicles must be conceived for the purposes of reducing emission of nitrogen oxides (NOₓ) into the atmosphere. A particularly widespread system having this purpose is based upon the process known as SCR (Selective Catalytic Reduction), which enables reduction of the nitrogen oxides of the gases by means of injection of a reducing agent into the exhaust line. These treatment systems presuppose that the reducing agent will be dosed and injected into the flow of the exhaust gases in order to convert nitrogen oxide (NOₓ) into nitrogen (N₂) and water (H₂O). For this purpose, the vehicle is equipped with a tank containing the reducing agent, associated to which are suitable means for providing dosed injection of the agent itself into the SCR system.

The reducing agent typically consists of urea in aqueous solution, which is liable to freeze when the tank is exposed to low temperatures (indicatively temperatures lower than -11°C). For this reason, the tank must be equipped with a heating device so that, in the event of freezing, the liquid agent can be liquefied and then injected into the exhaust line.

In some known solutions, the heating device is associated to a component of the tank, mounted in a fluid-tight way at an opening of the tank itself. This component is frequently conceived as an "active" module, i.e., equipped not only with the heating device but also with further components necessary for proper operation of the SCR system, such as a pump for injection of the reducing agent, a level sensor, a temperature sensor, a pressure sensor, etc. (see, for example, WO 2008/138960 A).

The heating devices that, according to the known art, equip these tank components are generally complicated, costly, and difficult to install.

DE 10 2009 0281 13 A1 discloses a heating device having the characteristics of the preamble of claim 1.

### Object and summary of the invention

In its general terms, the present invention aims to provide a heating device, or a component integrating such a device, that is simple and inexpensive to produce, as well as reliable from the operating standpoint. This and other aims still, which will emerge more clearly hereinafter, are achieved, according to the present invention, by a heating device having the characteristics referred to in claim 1. Preferred characteristics are indicated in the sub-claims. Likewise forming a subject of the invention is an exhaust system of an internal-combustion engine comprising such a heating device.

### Brief description of the drawings

The characteristics and advantages of the present invention will emerge clearly from the ensuing detailed description, with reference to the annexed drawings, which are provided purely by way of non-limiting example and in which:
- Figures 1A and 1B are a schematic perspective view and a sectioned perspective view, respectively, of a tank that comprises a component according to an embodiment of the invention;
- Figures 2 and 3 are a schematic top plan view and a schematic perspective view, respectively, of a component that integrates a heating device according to an embodiment of the invention;
- Figures 4 and 5 are a sectioned perspective view and a partially exploded view, respectively, of the component of Figures 2-3;
- Figure 6 is an exploded schematic view of a component that integrates a heating device according to an embodiment of the invention, limitedly to a body thereof and to a corresponding heater;
- Figures 7 and 8 are a schematic perspective view and a schematic top plan view, respectively, of a first semi-finished product used for producing a heating device according to one embodiment of the invention;
- Figures 9 and 10 are a schematic perspective view and a schematic top plan plan view, respectively, of a second semi-finished product used for producing a heating device according to one embodiment of the invention;
- Figure 11 is a detail at a larger scale of Figure 9;
- Figure 12 is a schematic perspective view of parts of a mould and of semi-finished products that can be used for producing a heating device according to an embodiment of the invention;
- Figure 13 is a sectioned perspective view of the mould parts of Figure 12, in a closed condition;
- Figures 14 and 15 are a schematic perspective view and a schematic top plan view, respectively, of a third semi-finished product used for producing a heating device according to an embodiment of the invention;
- Figures 16, 17, and 18 are a schematic perspective view, a schematic top plan view, and a schematic side elevation, respectively, of the third semi-finished product of Figures 14-15, following upon an operation of deformation;
- Figures 19, 20, and 21 are a schematic perspective view, a schematic top plan view, and a schematic side elevation, respectively, of the third semi-finished product of Figures 16-18, following upon an operation of removal of accessory parts;
- Figure 22 is a schematic perspective view of parts of a mould and of a semi-finished product that can be used for producing the body of a component integrating a heating device according to an embodiment of the invention;
- Figure 23 is a sectioned perspective view of the mould parts of Figure 22, in a closed condition;
- Figure 24 is a sectioned perspective view of a body of a component integrating a tank-heating device according to one embodiment of the invention;
- Figures 25 and 26 are details at a larger scale of Figure 24;
- Figure 27 is a partially sectioned perspective view of a component that integrates a heating device according to a further embodiment of the invention; and
- Figure 28 is a detail at a larger scale of Figure 27.

### Description of preferred embodiments of the invention

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment", "in one embodiment", or the like that may be present in various points of this description do not necessarily refer to one and the same embodiment. Furthermore, particular conformations, structures, or characteristics defined in the framework of the present description may be combined in any adequate way in one or more embodiments, even different from the ones represented. The reference numbers and spatial references (such as "upper", "lower", "top", "bottom", etc.) used herein are provided merely for convenience and hence do not define the sphere of protection or the scope of the embodiments.

The heating device that forms the subject of the present invention has a supporting body and two or more heating elements in the supporting body, in particular integrated therein. In various embodiments, the device is configured as a stand-alone component, in which case its supporting body is preferentially configured for installation and/or fixing in a more complex system, for example, the heating system of a motor vehicle. In other embodiments, the device forming the subject of the invention is, instead, integrated in a component pre-arranged for performing also functions different from heating of a generic medium, in which case a body of this component is exploited for providing also the supporting body of the heating device. In the sequel of the present invention initial reference will be made to this latter case.

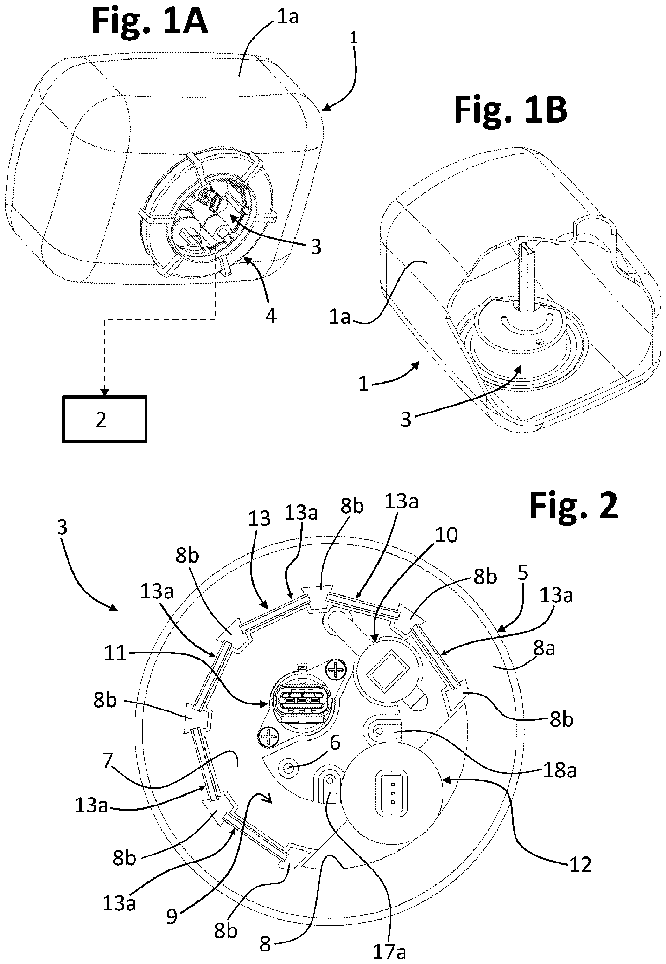

With initial reference to Figures 1A and 1B, designated as a whole by 1 is a tank for vehicles. In what follows, it is assumed that the tank is to contain an additive, or a reducing agent, and forms part of a system for treatment of exhaust gases of an internal-combustion engine, represented schematically by the block 2. In various embodiments, the treatment system 2 is of an SCR type, as explained in the introductory part of the present description, used for abatement of the emissions of nitrogen oxides and particulate, in particular in motor vehicles with diesel engines with a cubic capacity higher than 3500 cc. The aforesaid reducing agent may be urea in solution of distilled water, such as the one commercially known as AdBlue^{™}. The tank 1 could in any case be used for other purposes and/or in sectors other than the automotive sector, and is to contain a different liquid that requires heating, such as a fuel or a washing agent.

The main body 1a of the tank 1 may be made of any material, preferably a material that is chemically resistant to the reducing agent, for example, metal or a suitable plastic material, according to the known art, such as a high-density polyethylene (HDPE).

As may be seen in Figure 1B, the body 1a of the tank has an opening, not indicated, mounted in a fluid-tight way in a position corresponding to which is a component 3, which integrates a heater, described hereinafter. In the example, the aforesaid opening is provided in a lower part of the tank 1, but this position must not be understood as essential. In various preferred embodiments, such as the ones represented herein, the component 3 has a body shaped for enabling fixing in a fluid-tight way to the tank, i.e., for occluding the aforesaid opening of the tank. This body may be fixed in a fluid-tight way at the aforesaid opening according to modalities in themselves known: for instance, with reference to the example illustrated, the body of the component 3 is preferably mounted in a removable way via an engagement system including a corresponding fixing ring nut 4, it being possible, however, for it to be fixed in some other way, such as welding or via threaded means.

In various embodiments, the component 3 fulfils only heating functions, and its body hence provides a supporting and/or protection casing for the heating device. In other embodiments, such as the one exemplified herein, the component 3 is devised for performing a plurality of functions, amongst which the heating function, and integrates for this purpose a device according to the invention.

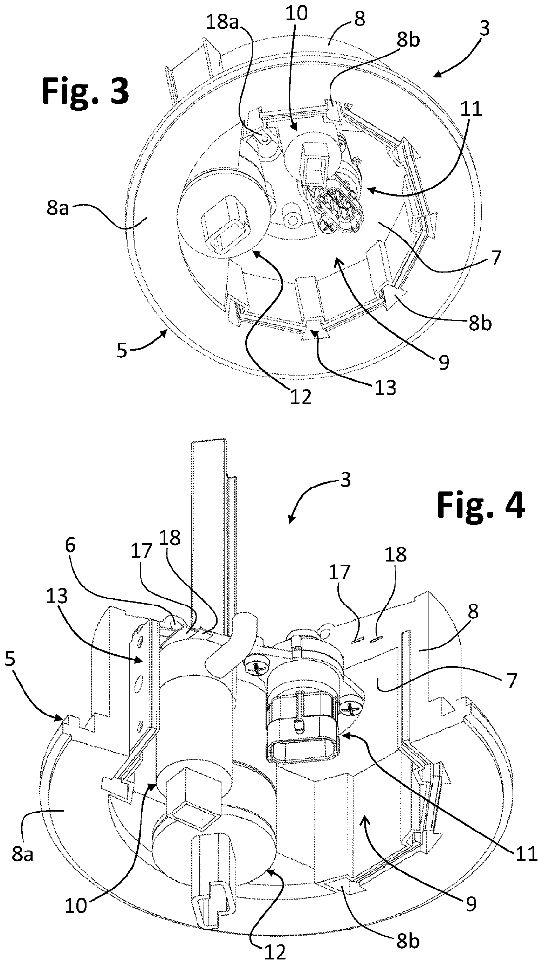

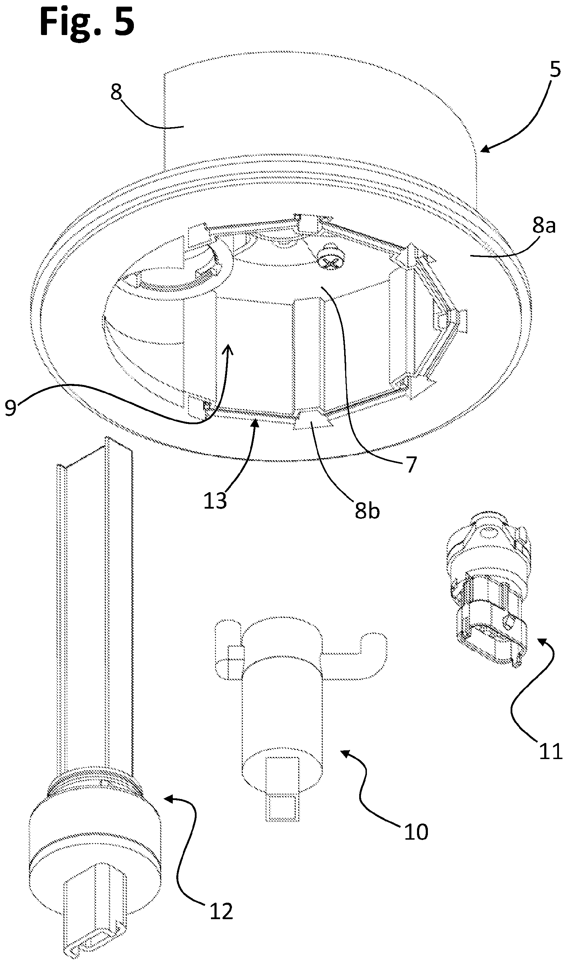

With reference also to Figures 2-5, in various embodiments, the body of the component 3, designated by 5, may define at least one passage - partially visible in Figure 4, where it is designated by 6 - through which the reducing agent can be supplied to the system 2. Preferentially, for this purpose, associated to the body 5 is a suitable pump, of a conception in itself known, having a delivery in fluid communication with the passage 6.

In various embodiments, the body 5 of the component 3 comprises a bottom wall 7 and a peripheral wall 8 that are substantially tubular. In the example shown, defined at the end of the wall 8 opposite to the wall 7 is a flange 8a projecting outwards, forming part of the system for engagement of the component 3 to the tank 1.

Once again with reference to the example illustrated, the peripheral wall 8 is substantially semicylindrical (or, more precisely, shaped like a cylindrical segment), but in other embodiments this wall 8 may have a different shape, for example, substantially tubular with circular section, elliptical section, polygonal section, etc., or else of some other shape not necessarily tubular, in particular a shape with a closed perimetral profile.

Also the bottom wall 7 may have various shapes, given in any case that its main function - when it is present and/or formed of a single piece with the peripheral wall 8 - is to contribute to closing the opening of the tank 1. In the example, the wall 7 closes at one end - here the upper end - the peripheral wall 8, and defines therewith a cavity 9 within which, if need be, there may set at least in part one or more functional devices of the component 3.

More in general, the body that integrates a heating device according to a preferential embodiment of the invention comprises at least one first wall - here exemplified by the peripheral wall 8 - in which one or more heating elements of a heater are prevalently integrated. In various embodiments, this body may include also a second wall - here exemplified by the bottom wall 7 - that is preferably substantially perpendicular to the first wall, in which there may also be partially integrated the aforesaid heating elements and/or corresponding electrical connection elements. In various embodiments of the invention, one of which is exemplified hereinafter, instead of a single wall that integrates a number of heating elements, the body of the heating device comprises a plurality of distinct walls, integrated in each of which is to a prevalent extent at least one respective heating element of the device. According to the type of application, these distinct walls may be in any case set according to an at least approximately ring-shaped configuration or a radial arrangement, or else according to other configurations.

Preferentially, defined at least in part in the bottom wall 7 is the passage 6 that enables the reducing agent to be drawn off. In various embodiments, for this purpose, associated to the body 5 is the pump referred to previously, designated by 10, preferably set in the cavity 9. In various embodiments, to the component 3 there may also be associated one or more further functional devices, for example, for detecting characteristics of the fluid contained in the tank 1. In possible embodiments, associated to the component 3 are sensor means, such as one or more from among a level sensor, a temperature sensor, and a pressure sensor. With reference to the case illustrated, housed within the cavity 9 of the body 5 are a pressure sensor 11 and, at least partially, a sensor 12 for detecting the level of the reducing agent in the tank 1. The type of implementation of the pump 10 and of the sensors 11, 12, or of other functional devices, such as a filter, as well as their modalities of installation on the body 5, may be according to any known technique. Moreover not excluded from the scope of the invention is the case where the component 3 is provided, additionally or alternatively, with sensor means different from the ones referred to, as well as with further active components of the system 2. Given that the reducing agent that is to be contained in the tank 1 is subject to freezing when the tank is exposed to low temperatures, incorporated in the body 5 of the component 3 is a heater of the device according to the invention, designated as a whole by 13 in Figures 2-5, described in detail hereinafter.

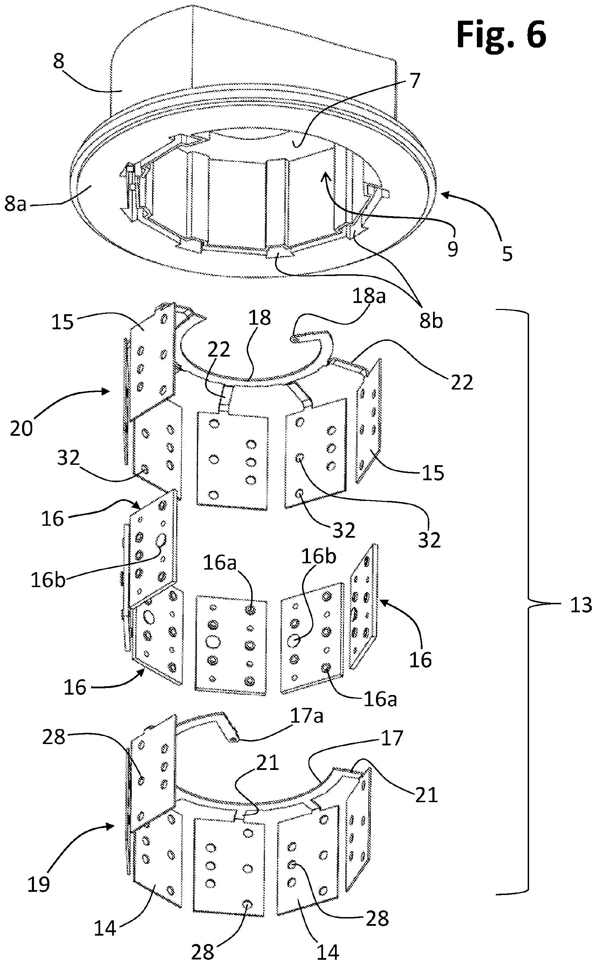

In general terms, the above heater 13 comprises a plurality of heating elements 13a, constituted by positive-temperature-coefficient (PTC) resistors. With reference to Figure 6, each heating element comprises a first electrode 14 and a second electrode 15, as well as a mass of material 16 having a PTC effect, set at least in part between the two electrodes 14 and 15. The electrodes 14 and 15 are preferably of a laminar, or plate, or grid, or comb type.

Preferentially, set in the area comprised between the two facing electrodes 14 and 15 is a prevalent part of the material with PTC effect 16. As will emerge more clearly hereinafter, in various embodiments, a minor or smaller part of the material 16 is set also at the opposite or outer faces of the electrodes 14 and 15, preferably to perform functions of fixing and/or positioning of the electrodes 14 and 15.

The heater 13 then includes common conductor elements 17 and 18, to which the electrodes 14 and 15, respectively, are connected in parallel. In preferred embodiments, the electrodes 14 are made of a single piece with the corresponding common conductor element 17, providing thereby a first shaped metal lamina 19, whereas the electrodes 15 are made of a single piece with the corresponding common conductor element 18, providing thereby a second shaped metal lamina 20. Preferentially, each of the plates 19 and 20 also defines respective connection portions, designated by 21 and 22, respectively, which extend between the corresponding common conductor element 17 or 18 and the corresponding laminar electrodes 14 or 15.

According to alternative embodiments, the electrodes 14 and/or 15 are made individually, even moulded or machined with techniques or shapes that differ from the one exemplified, and connected together via respective common electrical conductors configured as added elements, such as relatively rigid conductor metal or of the type defined as *"bus bar".* In these embodiments, the aforesaid added common conductors may be mechanically and electrically connected to the electrodes via specific operations (for example, welding and/or riveting and/or mutual fixing via mechanical deformation of at least one of the parts in question). Once again for the case of electrodes configured as distinct parts with respect to the corresponding common conductor elements, the latter may be made of an electrically conductive polymeric material, for example, overmoulded at least in part on the electrodes themselves.

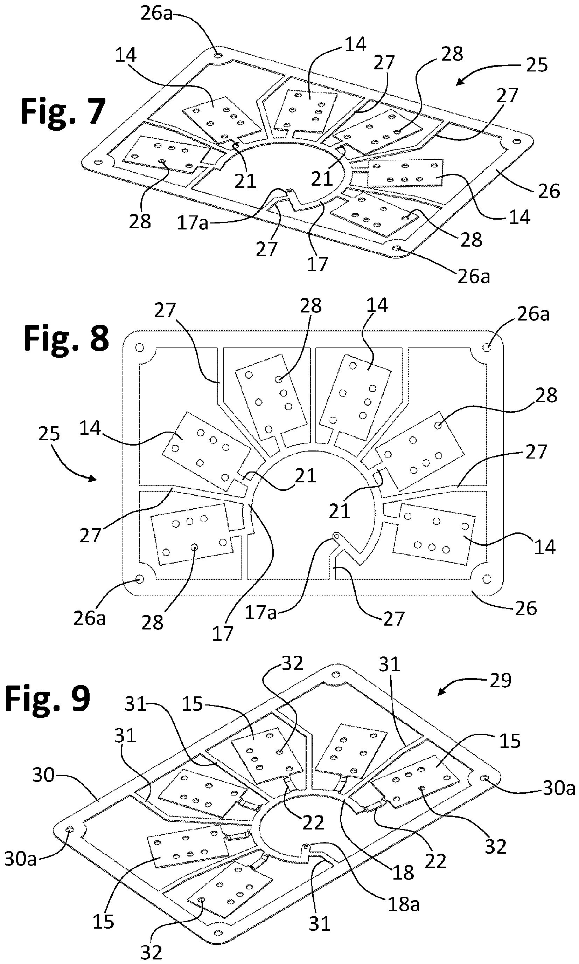

With reference now to Figures 7-8, a preferential method for obtaining the lamina 19 envisages that the latter is shaped - preferably via blanking and/or deformation - starting from a metal plate or strip (for example, made of steel), in order to obtain a first substantially flat or two-dimensional semi-finished product, designated by 25, which defines the electrodes 14, the common conductor 17 and, if envisaged, the connection portions 21. Within the substantially plane shape there may, however, be envisaged areas or parts differently shaped, such as curved or bent parts.

In various embodiments, the semi-finished product 25 also defines accessory portions, such as a peripheral frame 26, which, as will be seen, is useful for the purposes of handling in the step of production and/or subsequent positioning of the semi-finished product itself in a mould. In embodiments of this type, as represented in Figures 7-8, the semi-finished product 25 may also include supporting portions 27 that connect the frame 26 to at least one of the common conductor 17 and the electrodes 14.

Preferentially, during the blanking step, the electrodes 14 are formed with a plurality of seats or passages 28, the function of which will be clarified hereinafter. These seats or passages may include, for example, through holes of the electrodes, as in the case exemplified, or else indentations in the outer profile of the electrodes, or again blind cavities.

Also the common conductor 17 can be blanked so as to present, at one end thereof, a hole or a shaped portion, in order to define an electrical-connection terminal 17a. The shape of this terminal 17a may differ from the one illustrated, and not necessarily provided with the aforesaid hole.

In various embodiments, the common conductor element 17 has a substantially annular development, preferably an open-ring development. In the preferred case illustrated, this development is substantially shaped like an arc of a circle and, since it is obtained starting from a metal plate or strip, it basically has the shape of a flat band or strip. In embodiments of this type, the corresponding connection portions 21 extend in a radial direction from the conductor element 17. More in general, as will be understood hereinafter, it is preferable for the development in length of the conductor element 17 to have a shape substantially congruent with or similar to that of the wall 8 of the body 5.

Figures 9-10 illustrate, instead, a second, substantially two-dimensional or flat, semi-finished product 29 from which the lamina 20 of Figure 6 is obtained. This semi-finished product 29 defines the electrodes 15, the corresponding common conductor 18, and, if envisaged, the connection portions 22. The semi-finished product 29 is preferentially obtained with modalities similar to the ones described for the semi-finished product 25.

Also the semi-finished product 29 hence defines a respective peripheral frame 30 with corresponding positioning holes 30a and, preferably, supporting portions 31 that connect the frame 30 to the common conductor 18, to which the electrodes 15 are in turn connected (here by means of the portions 22). Also the electrodes 15 are preferably formed with a plurality of seats or passages 32 - here in the form of through holes - and the common conductor element 18 can be blanked so as to present, at one end thereof, a hole or a shaped portion in order to define an electrical-connection terminal 18a. Preferentially, the end of the conductive element 18 that provides the terminal 18a is in a position opposite to that of the terminal 17a of the conductor 17 of the semi-finished product 25, in particular in order to facilitate electrical connection and/or prevent electrical shorting between the terminals 17a and 18a.

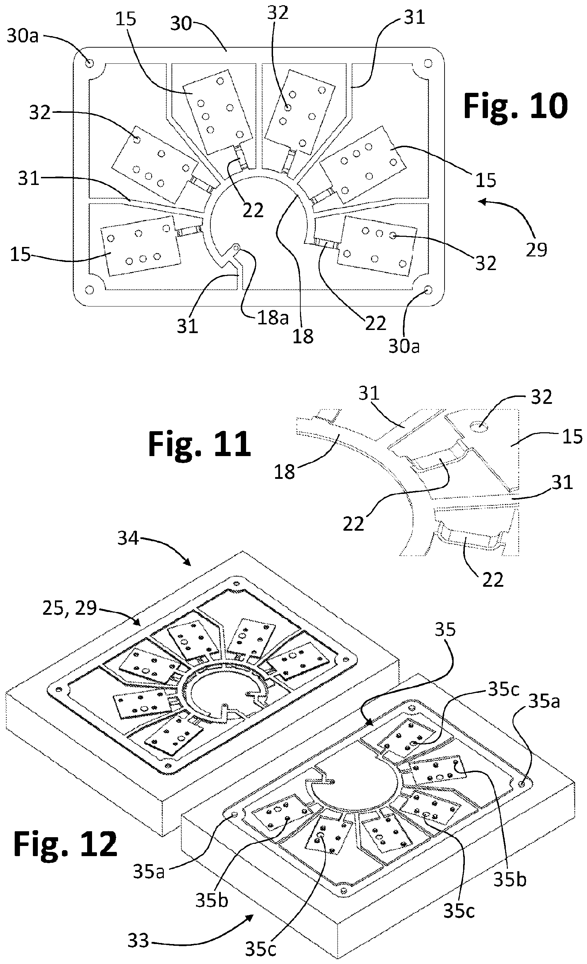

Preferentially, the common conductor element 18 develops in length according to a shape substantially similar to that of the conductor element 17. Very preferably, as in the case illustrated, the perimetral dimensions of the conductor element 18 are smaller than those of the conductor element 17 so that the two conductor elements 17 and 18 can be set substantially concentrically and at a distance apart from one another, with the corresponding electrodes 14, 15 in positions substantially facing and/or parallel to one another. In embodiments of this type, it is preferable for the connection portions 22 to have a development in length greater than that of the connection portions 21 and, preferably, to present at least one generally curved or shaped portion, as highlighted in Figure 11, for the purposes that will be evident hereinafter.

As may be noted, in the example illustrated, the connection portions 21, 22 and the electrodes 14, 15 are distributed and at a distance apart from one another along the development of the corresponding common conductor 17, 18, preferably in a substantially radial arrangement. The position of these elements on the two semi-finished products 25, 29 is such that, when the semi-finished products themselves are set on top of one another in generally mutually parallel positions, the electrodes 14 are substantially parallel to and facing the electrodes 15, at least for a predominant part thereof. The two semi-finished products 25 and 29 can then be introduced into a mould in the aforesaid parallel positions, in order to overmould thereon the material with PTC effect 16 of Figure 6. In particular, the two semi-finished products 25 and 29 are positioned in the aforesaid mould at a predefined distance apart, which defines the thickness of the material 16 moulded between the electrodes 14 and 15.

Figure 12 is a schematic illustration of a mould that can be used for the purpose, comprising two mould parts 33 and 34 defining at least one impression 35 of a shape corresponding to that of a respective semifinished product. As may be noted, in preferred embodiments, at least one impression 35, or each impression, defines positioning studs 35a for the frames 26 and 30 of the semi-finished products 25 and 29, which are provided for the purpose with corresponding positioning holes 26a and 30a.

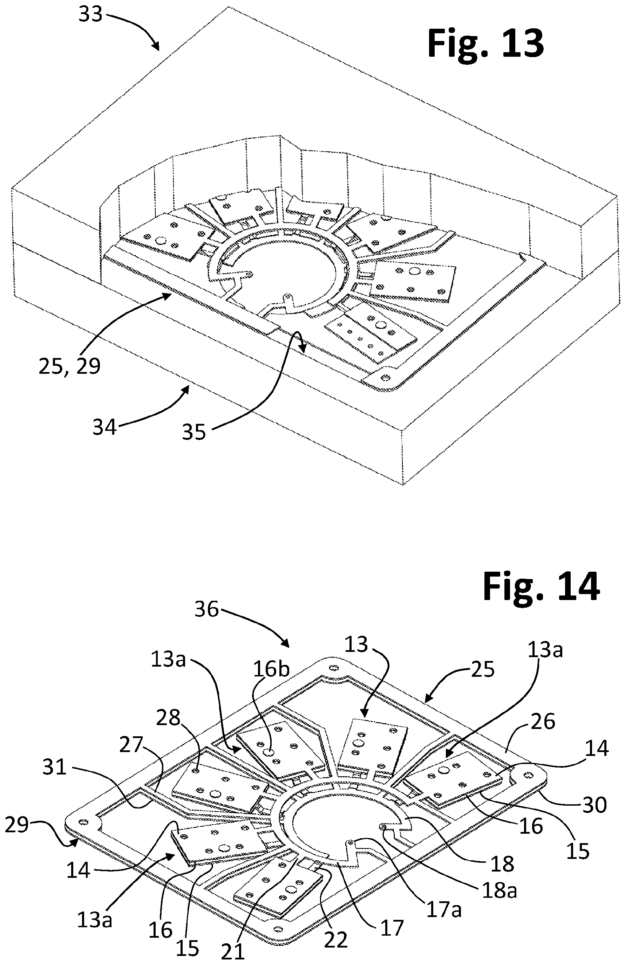

With the two mould parts 33 and 34 in the closed position, as may be seen in Figure 13, the two semi-finished products 25 and 29 are in generally parallel positions, without any contact with one another. The mould parts 33 and 34 - possibly with the aid of other mould parts or carriages or slides not represented - define seats in which the material with PTC effect 16 of the heating elements is to be injected, after prior protection of the parts that must not, instead, be overmoulded with this material, such as the conductor elements 17, 18, at least part of the connection portions 21, 22, the frames 26, 30, and the supporting portions 27, 31.

Then injected into the mould 33-34 is the material with PTC effect 16, which is preferably a material with a plastic or polymeric base, preferably including at least two different polymers, very preferably polymers that are not miscible together.

It is to be noted that some known polymers with PTC effect undergo, in the proximity of their melting point, a significant dimensional expansion, even greater than 10% in volume, causing a localized increase in resistivity. Melting of the polymer during heating induced via electrical supply entails, however, the drop of mechanical performance of the material, on account of the decay of the corresponding elastic modulus, and this considerably limits use thereof. These materials are moreover subject to problems of electrical contacting, in so far as - normally - polymers with PTC effect do not present good adhesion on the metals, and this entails a delamination or detachment, with variation of the electrical and thermal performance. These problems are felt more in the case of electrodes of a substantially laminar shape, where the greater expansion of the polymer with PTC effect as compared to the metal of the electrodes tends to cause a sort of sliding between the surfaces of the metal electrodes and of the polymer set in between, with consequent detachment between the parts and/or formation of air gaps, which are electrically and thermally insulating. The aforesaid risks of delamination or detachment are accentuated in the case of components or heaters for vehicles, which may be subject to extreme environmental conditions, with considerable thermal excursions.

For the above reasons, according to the invention, the plastic-based material 16 comprises a mixture of polymers that are incompatible or immiscible with one another, preferably at least two immiscible polymers, combined so as to obtain a co-continuous composite, such as a three-dimensional structure where the various polymers intersect developing in all directions. The above mixture is defined so that at least one of the polymers of the composite does not melt during heating induced via electrical supply of the elements 13a, consequently guaranteeing an adequate mechanical resistance of the material with PTC effect 16 even in the case where the other polymer or one of the other polymers of the composite reaches melting point during heating induced by electrical supply.

In various embodiments, in order to increase adhesion of the material 16 to the metal that forms the electrodes 14 and 15, the mixture comprises at least one ionomeric polymer, such as an ethylene-based thermoplastic copolymer, with monomers grafted to the polymeric chain that contain carboxyl groups partially neutralized by metal ions (for example, sodium or zinc ions), in particular with amounts of ion groups lower than 10% molar on a polyethylene base, such as ionomers of class "Surlyn" ^{™} manufactured by Dupont ^{™}. In this way, the carboxyl groups of the resistive material create ion bridge bonds both between the polymer chains of the material 16 and between the metal ions present on the surface of the electrodes 14 and 15, in particular in regard to ions due to surface oxidation of the electrodes 14, 15, thus improving adhesion of the resistive polymer 16 to the metal of the electrodes.

A scheme of the ion bridge bonds between the chain of the ionomer and the oxides naturally present on the metal surface is the following ("Me" indicates the metal of the lamina, which may, for example, be Cu and/or Al):

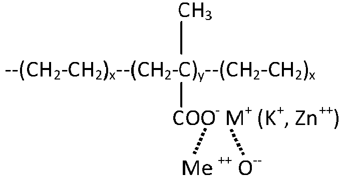

Alternatively, the carboxyl groups (acids) not neutralized by metal ions can attack the metal with a hydrogen-attack mechanism of the following type

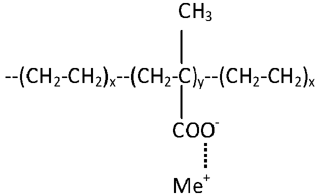

In preferred embodiments, the composition of the material with PTC effect 16 comprises a polypropylene (PP) in a percentage of between 39% and 44.5%, an ionomer in a percentage of between 40% and 44.5%, and a conductive additive or a carbon black in a percentage of between 11% and 20%.

Preferentially, the mould 33-34 is configured in such a way that the injected material penetrates only or prevalently into the spaces defined between the electrodes 14 and 15 set parallel and facing one another, and possibly in the passages or holes 28, 32, when envisaged.

After solidification of the resistive material injected, the mould 33-34 is opened, and a third semifinished product is extracted, visible in Figures 14-15 and designated by 36, which is constituted by the two semi-finished products 25 and 29 set on top of one another, with the respective parts of the material with PTC effect 16 that each extend between the facing surfaces of the various pairs of electrodes 14-15 to provide the heating elements 13a. Preferentially, in this third semi-finished product 36, which is still substantially flat, the common conductor elements 17 and 18 extend in respective parallel planes of lie.

Once again preferentially, at least one of the conductor elements 17 and 18, here the conductor element 18 of smaller dimensions, is provided with generally curved connection elements 22 (see Figure 11). This solution prevents in the semi-finished product 36 these portions 22 from coming into contact with the conductor element 17 during subsequent bending operations described hereinafter.

In the third semi-finished product 36 the heating elements 13a are hence now defined, each including two electrodes 14 and 15, set between which is the respective mass of material with PTC effect 16.

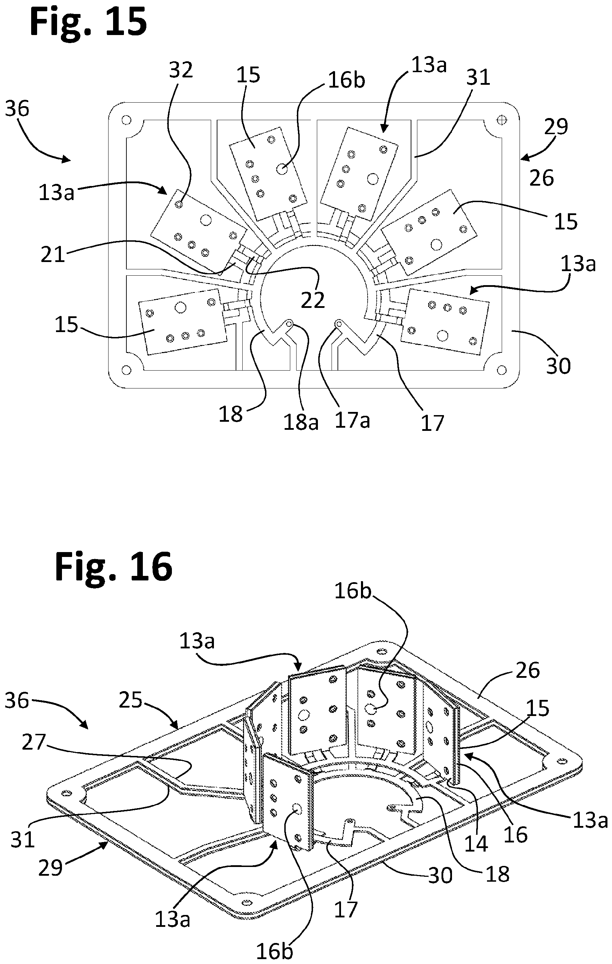

Next, the semi-finished product 36 is deformed in order to bestow thereon a different, substantially three-dimensional, shape. In particular, deformation is obtained by bending the heating elements 13a with respect to the common conductor elements 17, 18, so that the former will assume a position that is generally erected with respect to the latter, as may be seen in Figures 16-18. In various embodiments, at least one of the common conductor elements 17, 18 lies in a plane that is generally angled, in particular substantially perpendicular, with respect to a plane of lie of the heating elements 13a. Preferably, the heating elements 13a are bent at 90° or are set in a position substantially orthogonal to the original plane of the semi-finished product 36 (or of the semi-finished products 25 and 29).

With reference to the example illustrated, for the purposes of the operation of deformation, it is preferable for the connection portions 22 of the semi-finished product 29 to be longer than those of the element 25, this considering the fact that, in the case exemplified, the common conductor element 18 of the semi-finished product 29 has a radius smaller than the common conductor element 17 of the other semi-finished product 15: the greater length of the connection elements 22 causes, following upon the aforesaid deformation, the electrodes 15 to be substantially parallel to the electrodes 14 in the absence of mechanical stresses. It should moreover be considered that, by bending simultaneously the portions 21 and 22 of the overmoulded electrodes 14 and 15, the portion 22 more external to the point or radius of curvature tends to approach the conductor element 17. Consequently, considering the still substantially plane arrangement of the semi-finished products 25, 29, the shaped form of the portions 22 enables definition of a relatively large initial distance of the portions 22 of the conductor 18 from the conductor 17. Following upon bending, this distance decreases, but is in any case such as to guarantee proper electrical insulation. The common conductors could even have a circular or closed profile and/or could have substantially the same radius and be substantially set on top of one another, with a staggered arrangement of the connection terminals 17a and 18a.

As may be appreciated, following upon deformation, the heating elements 13a are set substantially vertically, in a sequence approximately curved or with an open-ring development, or more in general, a sequence that has a development congruent with the perimetral development of the peripheral wall 8 of the body 5 within which the heater 13 is to be at least in part integrated. As already mentioned, the shape of the wall 8 of the body 5 does not necessarily have to be cylindrical or partially cylindrical. It could be elliptical or polygonal, and in these embodiments the common conductor elements 17 and 18 will have a corresponding shape, or in any case a shape such that, after the operation of bending of the semi-finished product 36, the overall shape given by the ensemble of the heating elements 13a will be similar to that of at least part of the aforesaid peripheral wall 8.

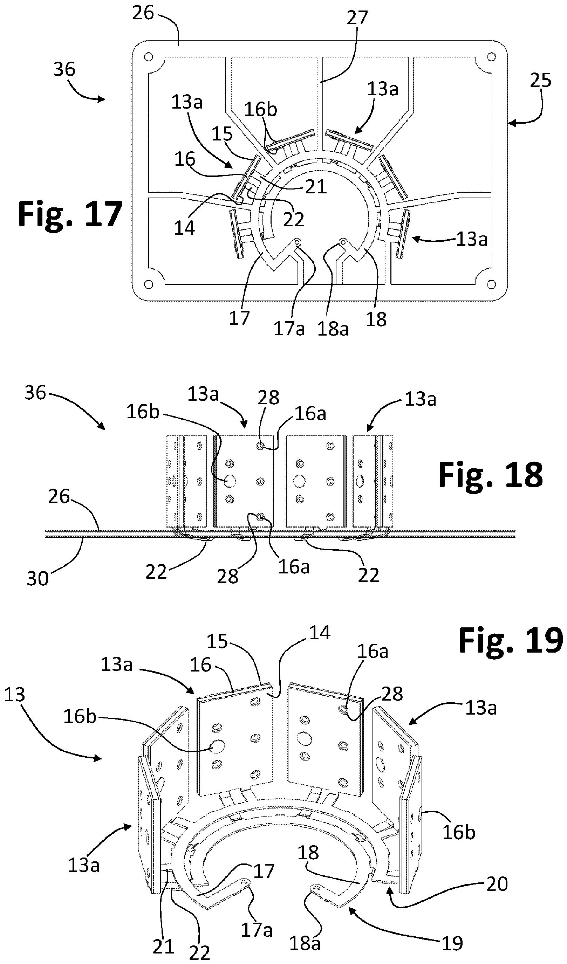

In various embodiments, in which the semi-finished products 25 and 29 comprise the respective frame 26, 30 and the supporting portions 27, 31, after the operation of bending of the semi-finished product 36, or else of the semi-finished products 25, 29 joined together by the material with PTC effect 16, the accessory parts, represented by the aforesaid frames and/or supporting portions, are removed. Following upon this operation, which may be carried out, for example, via blanking, the heater 13 is formed, which is substantially as shown in Figures 19-21, constituted by just the shaped metal plates 19 and 20 (see Figure 6) with the resistive material 16 set between the corresponding electrodes 14 and 15.

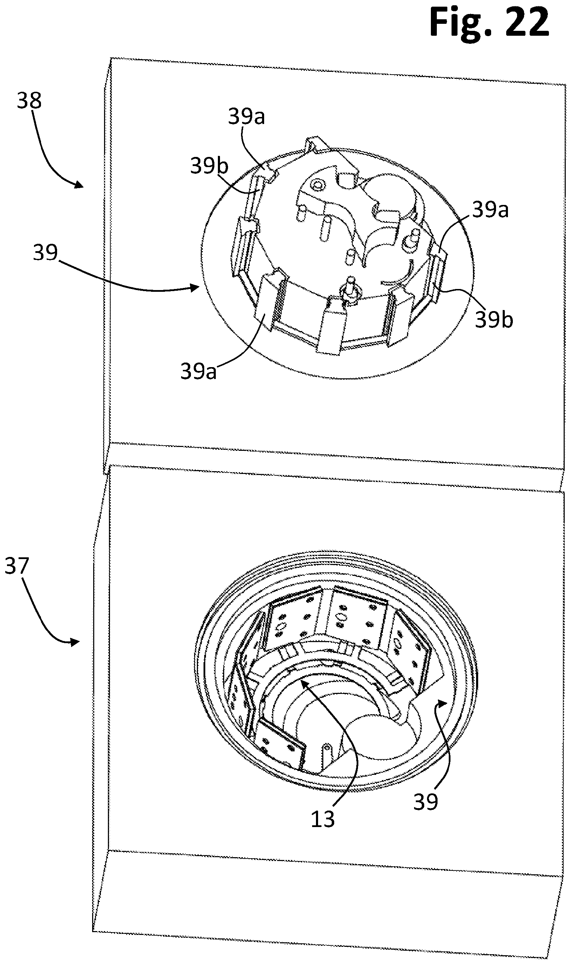

The heater 13 is then set in a further mould, used to form the body 5 of the component 3, which here provides also the body of the heating device. Such a mould, represented schematically in Figure 22, comprises at least two mould parts 37, 38, and possibly other movable parts or carriages or slides, not shown. At least one mould part comprises an impression 39, in particular designed to mate with at least part of the profile of the heater 13, preferably for supporting or positioning the heater itself in the mould and/or for covering areas on which the plastic material is not to be injected.

Preferentially, the two main parts of the mould each have an impression, designed to define corresponding portions of the inner and outer profile of the body 5, and specifically a female impression, in the mould part here designated by 37, designed to define substantially the outer profile of the body 5, and a male impression, in the mould part here designated by 38, designed to define substantially the inner profile of the body 5.

After closing of the two parts 37 and 38, with the heater 13 in between, a plastic material is injected into the mould, such as a polymer chemically resistant to the reducing agent or other fluid, preferably a thermoplastic material, that is to form at least in part the body 5, preferably the entire body 5.

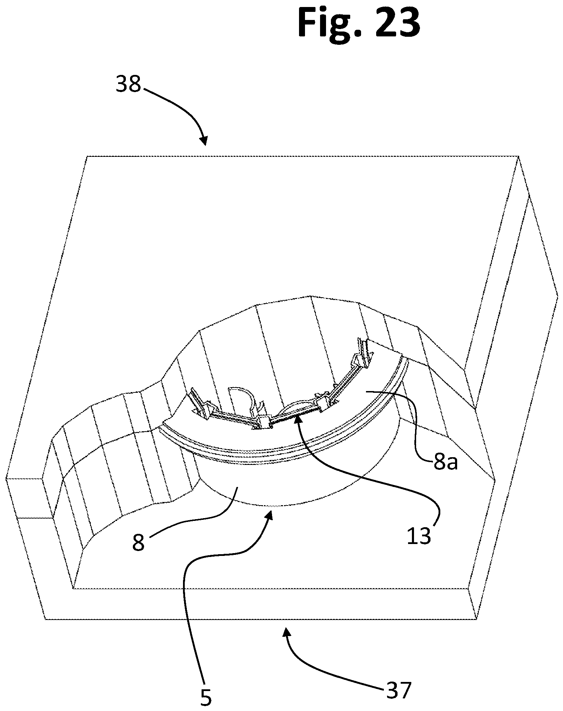

In Figure 23, the mould 37-38 is represented in a closed and partially sectioned condition, with the visible part of the body 5 already formed, which integrates the heater 13. The mould 37-38 is configured in such a way that the heating elements of the heater 13 are at least partially embedded in the plastic material that is to provide the substantially tubular peripheral wall 8 of the body 5, with the material that thus coats at least partially the heating elements. After a time for awaiting solidification of the injected plastic material, the body 5, overmoulded on the heater 13, can be extracted from the mould 37-38.

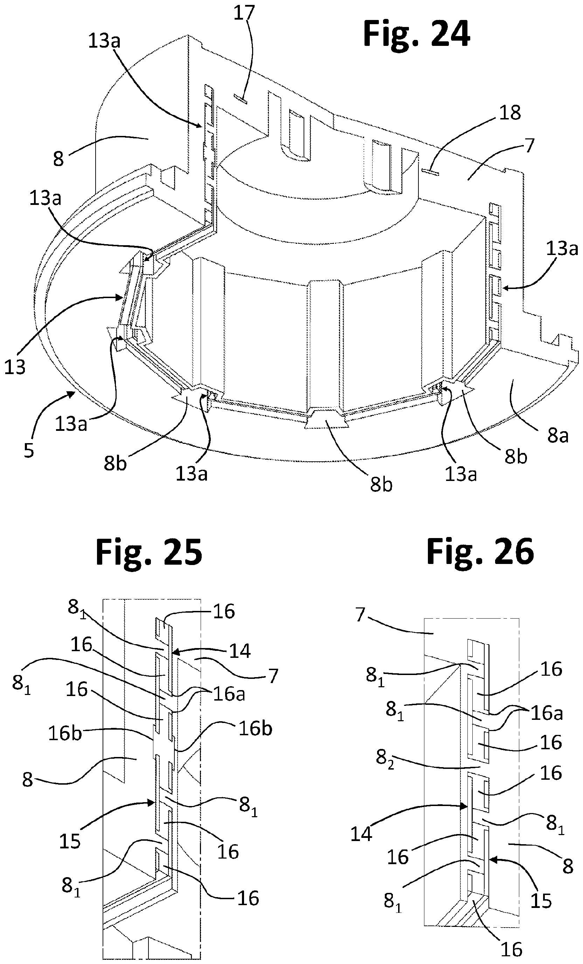

The body 5 thus obtained presents substantially as may be seen in Figure 24 (it should be noted that in this figure the representation of some functional components or elements of the bottom wall 7 has been omitted, for requirements of greater clarity).

As may be noted (see also Figure 2), following upon the overmoulding operation, the heating elements 13a (i.e., the corresponding electrodes 14 and 15) are distributed and set at a distance apart from one another along the perimetral direction of the wall 8 of the body 5, here corresponding to its substantially semicylindrical part.

With such a configuration, the outer face of the electrodes 15 faces the outer side of the wall 8, whereas the outer face of the electrodes 14 faces the inner side of the wall 8, with the material with PTC effect 16 that extends, instead, between the inner faces of the electrodes themselves. In the example illustrated, the heating elements 13a are set angled with respect to one another and at an angular distance apart in the perimetral direction of the peripheral wall 8.

Hence, in effect, the body 5 is formed with the plastic material, in particular of an electrically insulating type and preferably of a thermally conductive type, overmoulded on the two shaped laminas 19 and 20 represented in Figure 6, with the material with PTC effect 16 set in between. The aforesaid plastic material is preferably added with thermoconductive particles or fillers, such as graphite at 35wt%, in order to obtain a good thermal conduction and/or an effective dissipation of the heat produced by the heater 13 towards the external environment, i.e., towards a liquid or other fluid to be heated.

Preferably, the material of the body 5 or of at least one part of body that coats at least in part the heater 13 is made of a PPgMA (polypropylene copolymer grafted with maleic anhydride).

PPgMA has a structural formula

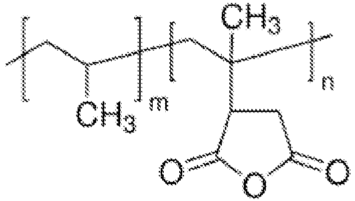

Adhesion to the metal derives either from an ion attraction between the oxygen atoms and the metal ions present on the surface (ions of the surface oxide) or else from a salification reaction, favoured by the high moulding temperatures, once again with the surface oxide, as represented schematically in the following figure (where "Me" is a generic metal that may be Fe, Cu, or Al).

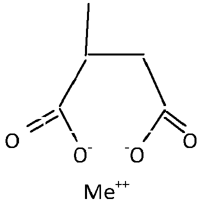

The thermoplastic resin may be replaced by an epoxy-based thermosetting material. The lower viscosity of a thermosetting polymer enables a better delivery of the resin, which can be dispensed over a smaller thickness. After the curing process, chemical bonds are created between the epoxy chains favoured by breaking of the molecular structure typical of these resins, i.e., an ethylene oxide (represented below) inserted in a polymeric chain containing also benzene rings with a molar weight of around 1000 Da, as against a typical molar weight of thermoplastics that is greater than 100000 Da.

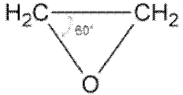

Preferentially, the epoxy resin that can be used instead of the thermoplastic polymers has within it fillers that render it thermoconductive, with a heat-transmission coefficient of up to 3 W/mK.

The presence of polar groups causes a good ion-bridge adhesion on the oxides naturally present on the metal surface, in a way similar to what has been seen for PPgMA. Complete polymerization normally takes 24 hours (gelification in 2/4 hours) at room temperature, with an acceleration to 2-4 hours in the case of heating (60-80°C).

From Figure 24, and from the corresponding detail of Figures 25-26, it may be noted how, in preferred embodiments, the heating elements 13a of the heater 13 are prevalently embedded in the overmoulded plastic material that forms a first wall of the body 5, here represented by the peripheral wall 8. In preferred embodiments, as in the one represented, the heating elements 13a are partially embedded also in the overmoulded plastic material that provides a second wall of the body 5, here represented by the bottom wall 7. Preferentially, at least one of the two common conductor elements 17 and 18, and preferably both, is embedded at least in part in the overmoulded plastic material that provides the aforesaid second wall or bottom wall 7. On the other hand, in embodiments (not represented) the conductor elements, or at least one of them, could be embedded in the material that forms the wall 8. In principle, moreover, the heating elements 13a could also be embedded only in the material that forms the wall 8.

In various embodiments, the heating elements 13a are not completely covered by the overmoulded plastic material, in particular at at least one end of the wall 8, as in the case exemplified. If required by the application, these areas not covered by the overmoulded material can be covered or protected in some other way, for example, via a resin, sealing elements, or a lid. The mould 37-38 is obviously pre-arranged for this purpose. This characteristic is preferable in order to facilitate moulding and/or compensation of possible dimensional variations of the body 5 when the heater 13 is active.

In various embodiments, the common conductor elements 17 and 18 each have a respective portion not covered by the overmoulded plastic material. This portion, preferably an end portion, is to provide the connection terminals of the heating device, already designated previously by 17a and 17b, possibly shaped for providing at least part of the terminals of an electrical connector. As may be appreciated, for example, from Figure 2, these terminals 17a and 17b are preferentially accessible from inside the cavity 9 of the body 9, preferably substantially at its bottom wall 7.

As explained previously, preferentially, the electrodes 14 and 15 have one or more seats or passages, like the holes 28 and 32, respectively. In various embodiments, at least some of these passages or holes, following upon the operation of overmoulding of the plastic material that is to provide the body 5, are occupied by part of this material in order to improve mechanical anchorage of the heating device 13 to the body 5.

It is also preferable for there to be defined, in the material with PTC effect 16 moulded between two electrodes 14 and 15, cavities substantially aligned axially to respective passages or holes 28 or 32. These cavities, some of which are designated by 16a in Figures 6, 18 and 19, may be in part defined by hollow formations in the electrodes 14, 15 and/or in the resistive material 16 and are to be occupied by respective parts of the overmoulded plastic material of the body 5, in particular for the purposes of a positioning and/or fixing of the heater 13 with respect to the body 5. It should be noted that, in the preferential case illustrated, at least one part of the resistive material 16 of the hollow formations that partially define the cavity 16a - here substantially cylindrical formations - is engaged in the holes 28, 32 of the electrodes 14, 15, and this contributes to guaranteeing fixing and/or maintenance of the corresponding correct position between the parts. For the formation of these cavities 16a and/or of the corresponding hollow formations, the corresponding mould parts 33, 34 (Figures 12-13) are purposely shaped; for example, they are provided with corresponding studs 35b (see Figure 12).

The characteristic in question may be noted also in Figures 25 and 26, where the plastic material that occupies some of the cavities 16a (just one is indicated in each figure) is designated by 8₁. It should be noted that the passages or holes 28 or 32 of one electrode - and hence the corresponding cavities 16a of the material 16 - are preferably aligned axially to a closed region of the other electrode.

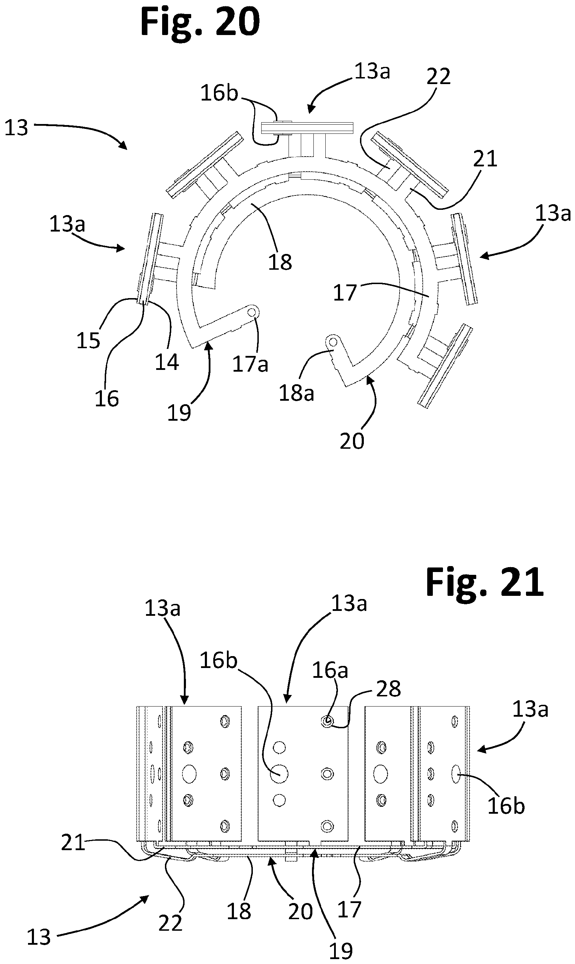

In preferred embodiments, on the other hand, at least one electrode 14 has a passage or through hole 28 axially aligned with a passage or through hole 32 of the corresponding electrode 15. In this way, part of the material with PTC effect 16 occupies the above aligned holes of the two laminar or plate electrodes. This characteristic contributes to improving solidity of the individual heating elements 13a, in particular during handling of the semi-finished product 36 or of the heating device 13. Preferentially, one part of the resistive material projects beyond these two aligned holes, towards the outer sides of the heating element 13a, and bestowed thereon is a shape having perimetral dimensions that are larger than those of the passages or holes. In the figures, these shaped projecting portions of the resistive material are substantially disk-shaped and are designated by 16b, for example, in Figures 6, 14, 17, 20, and 25. From Figures 17 and 20, it may well be appreciated how the projecting portions of material 16b on the outer sides of a heating element 13a contribute to keeping the electrodes 14, 15 and the resistive material 16 packed together. Also in this case, the impressions 35 of the mould parts 33-34 are appropriately shaped for definition of the shape of the above projecting portions 16b (see Figure 12, where designated by 35c are some parts of impression that are to bestow the disk shape on the projecting portions 16b of the material 16).

The electrodes 14 and 15 may also envisage axially aligned holes to enable passage of the overmoulding material of the body 5 in order to increase further anchorage of the heating device 13 to the body 5. For this purpose, the mould 33-34 will be shaped in such a way that at these two aligned holes also the resistive material 16 defines a through cavity. This characteristic may be appreciated from Figure 26, where designated by 8₂ is a part of the plastic material of the body 5 that extends between two aligned holes of the electrodes 14 and 15.

In preferred embodiments, defined in the peripheral wall 8 of the body 5 are one or more cavities, preferably open in an axial and/or radial direction, distributed and at a distance apart from one another along the perimetral direction of the wall itself, where giving out into each of these cavities or projecting at least partially therefrom is a side edge of at least one heating element 13a. The cavities in question are designated in the figures by 8b and may prove useful for compensation of possible dimensional variations of the heater 13 during its activation and/or of the body 5, when it is heated by the heater 13.

In the example illustrated, some of these cavities are shaped so as to have in opposite parts the side edges of two different heating elements 13a. Two end cavities 8a are then provided, which receive the outer side edge of the last two heating elements 13a of the device 13. The mould 37-38 used for obtaining the body 5 is of course appropriately shaped for the purpose; preferably, the mould 38 is shaped so as to exploit the mould portions 39 that provide the above cavities 8a and 8b also for supporting the heating elements 13a during moulding or overmoulding of the body 5.

In the example of Figure 22, for example, the male impression 39 has for the purpose portions 39a that are to define the inner profile of the cavities 8b, these portions preferably defining grooves 39b for positioning the side edges of the heating elements 13a.

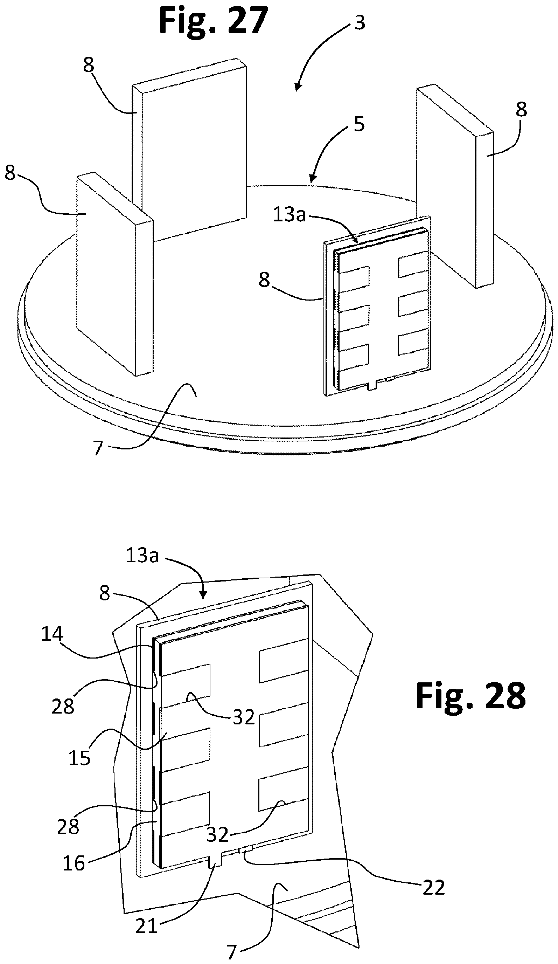

Figures 27 and 28 illustrate, merely by way of example, a variant of the heating device according to the invention, here designated as a whole by 3. In these figures, the same reference numbers as those of the previous figures are used to designate elements that are technically equivalent to those already described above.

The body 5 of the device 3 does not present in this case a continuous peripheral wall, but a series of first distinct walls 8, here of a substantially parallelepipedal shape, which rise from a second common wall 7, here being substantially disk-shaped or flat, these shapes not being on the other hand imperative. The body 5 may be made of a thermoplastic material, preferably a good heat conductor, and possibly with fillers for this purpose, in a way similar to what has already been described previously.

In this embodiment, in the moulded plastic material that provides each of the walls 8, a heating element 13a, obtained according to the modalities described previously, is at least partially integrated. In the case exemplified, each wall 8 is provided with a heating element, but in configurations not represented a different number of heating elements may be integrated in each wall. Once again with reference to the example illustrated, the walls 8 are set substantially orthogonal to one another, in any case according to an approximately annular configuration: it is, however, evident that the same walls could be oriented in a different way according to the type of application, for example, with two or more walls set parallel to one another, or else in staggered positions, or again aligned in a longitudinal direction, etc. The walls 8 could also be connected together to form a single tubular wall, or also be at least in part substantially parallel to the bottom wall 7.

Also in embodiments of this type, the heating elements 13a and/or the common conductor elements - here not visible - may be integrated at least in part in the wall 7 and connected to the corresponding electrodes via connection portions 21 and 22 (Figure 28).

The shape of the electrodes 14 and 15 of the device of Figures 27-28 is different from that of the embodiments described previously. Also in this case, on the other hand, the electrodes 14, 15 have a generally lamina or plate-like configuration and have respective passages 28, 32 for the material with PCT effect 16, for the purposes described previously. In the case exemplified, the passages 28, 32 are defined by indentations or recesses of the peripheral profile of the electrodes, but in variant embodiments these passages could comprise through holes, some of which are possibly able to receive also part of the overmoulded material of the body 5, in a way similar to what has been described previously.

It will be appreciated that the device 3 of Figures 27-28 is suited, if need be, also for a use similar to the one described with reference to Figures 1-2, just for functions of heating of the fluid contained in a tank.

From the foregoing description, the characteristics of the present invention emerge clearly, as likewise its advantages. The body of the tank component according to the invention is simple to produce, via an operation of moulding of plastic material with which the heating device is integrated in the body itself. The latter is likewise simple to produce, in so far as it can be obtained via elementary operations of blanking and deformation of metal laminas and subsequent moulding of the electrically resistive material. The preferred conformation of the heating device, which enables prevalent integration thereof in the peripheral wall of the plastic body of the component, ensures a diffused distribution of heat, when unfreezing of the content of the tank becomes necessary. The heating device has an intrinsically stable structure and likewise stable is its anchorage in the material of the body of the component, at the same time enabling the recovery of any possible dimensional deformation of the body due to temperature variations. The material with PTC effect used, a mouldable plastic-based or polymeric-based material, facilitates production of the device, at the same time guaranteeing good adhesion and/or good electrical and/or thermal contact with the corresponding electrodes, which function as metal elements for electrical connection and dissipation of heat.

It is clear that numerous variations may be made by the person skilled in the art to the module described by way of example herein, without thereby departing from the scope of the invention as defined by the ensuing claims.

In the embodiments previously exemplified, the body 5 of the tank component 13 has a peripheral wall and a bottom wall formed integrally in a single piece. However, according to possible variant embodiments, the component in question includes the single peripheral wall 8, embedded at least partially in the plastic material of which is the heating device 3, and then associated in a fluid-tight way to the component is a bottom wall (such as the wall 7), possibly pre-arranged for installation of one or more functional components, such as the pump and sensors mentioned previously.

Finally, it is pointed out that the component described could be an integral part of the body of a tank. With reference, for example, to Figure 1, the body 1a of the tank 1 could be formed, for instance, in two half-shells joined together in a fluid-tight way, with the lower half-shell that has a passage defined by a tubular wall, similar to the tubular wall previously designated by 8, in which a heating device according to the invention can be integrated with the modalities described previously. In the case where the tubular part is not defined integrally with a bottom wall of its own (such as the wall 7), the connection terminals (17a, 178) of the heating device could be oriented so as to project on the outside of the tubular wall, following upon the operation of overmoulding of the plastic body.

The semi-finished products 25 and 29 can be blanked as parts distinct from one another, or else blanked from one and the same plate to form a single element, for example, with the part 29 that is connected to the part 25 via metal bridges, that are to be eliminated subsequently. In an embodiment of this type, for example, after blanking in a single piece, the part 29 is bent back on the part 25, and the piece is then inserted in an appropriate mould 33, 34 for moulding of the material 16, in order to obtain the semi-finished product 36; subsequently, the accessory parts that are not necessary are eliminated.

## Claims

1. A heater device that comprises one or more heating elements (13a), wherein the heating element or each heating element (13a) includes one first electrode (14), one second electrode (15), and a material having a PTC effect (16) set at least in part between the two electrodes (14, 15),
wherein the material having a PTC effect is a plastic-based or polymeric-based mouldable material,
**characterized in that**:
- the material having a PTC effect is a plastic-based or polymeric-based mouldable material that comprises a mixture of incompatible or immiscible polymers, including at least two immiscible polymers, combined so as to obtain a co-continuous composite, and
wherein at least one of the polymers of the mixture has a melting temperature that cannot be reached following upon heating induced via electrical supply of the heating device (3).

2. The heater device according to Claim 1, wherein the mixture comprises at least one ionomeric polymer, such as an ethylene-based thermoplastic copolymer with monomers grafted to the polymeric chain containing carboxyl groups partially neutralized by metal ions.

3. The heater device according to Claim 1, wherein the mixture comprises a polypropylene in a percentage of between 39% and 44.5%, an ionomer in a percentage of between 40% and 44.5%, and a conductive additive or a carbon black in a percentage of between 11% and 20%.

4. The heater device according to Claim 1, comprising a supporting body (5) and a plurality of heating elements (13a) in the supporting body (5), such that the heater device comprises a number of said first electrodes (14) and a number of said second electrodes (15),
wherein the first electrodes (14), respectively the second electrodes (15), are arranged mutually spaced in the supporting body (5), with the first electrodes (14) generally parallel to and facing the second electrodes (15).

5. The heater device according to Claim 1, wherein the first electrodes (14) are connected to a first common electrical conductor element (17) and the second electrodes (15) are connected to a second common electrical conductor element (18), in such a way that the heating elements (13a) of the plurality of heating elements (13a) are electrically connected in parallel via the first common electrical conductor element (17) and the second common electrical conductor element (18).

6. The heater device according to Claim 4 or 5, wherein the supporting body (5) has a peripheral wall (8), and the first electrodes (14), respectively the second electrodes (15), are distributed according to a generally annular configuration, in particular along a perimetral direction of the peripheral wall (8) of the supporting body (5).

7. The heater device according to Claim 6, wherein the peripheral wall (8) of the supporting body (5) has a shape with a closed perimetral profile, the first electrodes (14) and the second electrodes (15) are substantially flat, and the heating elements (13a) of the plurality of heating elements are set angled with respect to one another and at an angular distance apart from one another in a perimetral direction of the peripheral wall (8).

8. The heater device according to Claim 1, wherein the supporting body (5) has a plurality of first walls (8) which rise from a common wall (7), in each of said first walls (8) being at least partially integrated at least one heating element of the plurality of heating elements (13a).

9. The heater device according to Claim 8, wherein said first walls (8) are connected together to form a single tubular wall.

10. The heater device according to any one of the preceding claims, wherein the supporting body (5) belongs to a component (1) of a motor vehicle, in particular of a motor-vehicle fuel tank and/or of a system for treatment of exhaust gases of an internal-combustion engine.

11. An internal-combustion engine exhaust-gas system, comprising a system for injection of a reducing liquid additive (2) supplied by a tank (1), wherein the tank (1) comprises a tank component (3) that includes a heater device according to one or more of Claims 1 to 9.

## Patentansprüche

1. Heizvorrichtung, die ein oder mehrere Heizelement/e (13a) umfasst, wobei das Heizelement oder jedes Heizelement (13a) eine erste Elektrode (14), eine zweite Elektrode (15) sowie ein Material mit einem PTC-Effekt (16) enthält, das wenigstens teilweise zwischen den zwei Elektroden (14, 15) angeordnet ist,
das Material mit einem PTC-Effekt ein formbares Material auf Kunststoff- oder Polymer-Basis ist,
**dadurch gekennzeichnet, dass:**
- das Material mit einem PTC-Effekt ein formbares Material auf Kunststoff- oder Polymer-Basis ist, das ein Gemisch aus inkompatiblen oder nicht mischbaren Polymeren, einschließlich wenigstens zweier nicht mischbarer Polymere, umfasst, die so kombiniert werden, dass ein kokontinuierlicher Verbundstoff entsteht, und
wobei wenigstens eines der Polymere des Gemisches eine Schmelztemperatur hat, die bei einer durch Stromzufuhr zu der Heizvorrichtung (3) induzierten Erwärmung nicht erreicht werden kann.

2. Heizvorrichtung nach Anspruch 1, wobei das Gemisch wenigstens ein ionomeres Polymer, beispielsweise ein thermoplastisches Copolymer auf Ethylen-Basis, mit an die Polymerkette anpolymerisierten Monomeren umfasst, die teilweise durch Metallionen neutralisierte Carboxylgruppen enthalten.

3. Heizvorrichtung nach Anspruch 1, wobei das Gemisch ein Polypropylen in einem Anteil zwischen 39 % und 44,5 %, ein lonomer in einem Anteil zwischen 40 % und 44,5 % sowie ein leitfähiges Additiv oder ein Ruß in einem Anteil zwischen 11 % und 20 % umfasst.

4. Heizvorrichtung nach Anspruch 1, die einen Trägerkörper (5) und eine Vielzahl von Heizelementen (13a) in dem Trägerkörper (5) so umfasst, dass die Heizvorrichtung eine Anzahl der ersten Elektroden (14) und eine Anzahl der zweiten Elektroden (15) umfasst,
wobei die ersten Elektroden (14) bzw. die zweiten Elektroden (15) in dem Trägerkörper (5) voneinander beabstandet angeordnet sind, und die ersten Elektroden (14) im Allgemeinen parallel zu den zweiten Elektroden (15) sowie ihnen zugewandt sind.

5. Heizvorrichtung nach Anspruch 1, wobei die ersten Elektroden (14) mit einem ersten gemeinsamen elektrischen Leiterelement (17) verbunden sind und die zweiten Elektroden (15) mit einem zweiten gemeinsamen elektrischen Leiterelement (18) verbunden sind, so dass die Heizelemente (13a) der Vielzahl von Heizelementen (13a) über das erste gemeinsame elektrische Leiterelement (17) und das zweite gemeinsame elektrische Leiterelement (18) elektrisch parallel verbunden sind.

6. Heizvorrichtung nach Anspruch 4 oder 5, wobei der Trägerkörper (5) eine Umfangswand (8) aufweist und die ersten Elektroden (14) bzw. die zweiten Elektroden (15) entsprechend einer im Allgemeinen ringförmigen Anordnung, insbesondere entlang einer Umfangsrichtung der Umfangswand (8) des Trägerkörpers (5), verteilt sind.

7. Heizvorrichtung nach Anspruch 6, wobei die Umfangswand (8) des Trägerkörpers (5) eine Form mit einem geschlossenen Umfangsprofil hat, die ersten Elektroden (14) und die zweiten Elektroden (15) im Wesentlichen flach sind und die Heizelemente (13a) der Vielzahl von Heizelementen in einer Umfangsrichtung der Umfangswand (8) winklig zueinander und in einem Winkelabstand voneinander angeordnet sind.

8. Heizvorrichtung nach Anspruch 1, wobei der Trägerkörper (5) eine Vielzahl erster Wände (8) aufweist, die von einer gemeinsamen Wand (7) ansteigen, und in jede der ersten Wände (8) wenigstens ein Heizelement der Vielzahl von Heizelementen (13a) wenigstens teilweise integriert ist.

9. Heizvorrichtung nach Anspruch 8, wobei die ersten Wände (8) miteinander verbunden sind und eine einzelne röhrenförmige Wand bilden.

10. Heizvorrichtung nach einem der vorangehenden Ansprüche, wobei der Trägerkörper (5) zu einem Bauteil (1) eines Kraftfahrzeugs, insbesondere eines Kraftfahrzeug-Kraftstofftanks und/oder einem System für Behandlung von Abgasen eines Verbrennungsmotors, gehört.

11. Abgassystem eines Verbrennungsmotors, das ein System für Einspritzung eines reduzierenden flüssigen Additivs (2) umfasst, das von einem Tank (1) zugeführt wird, wobei der Tank (1) eine Tank-Komponente (3) umfasst, die eine Heizvorrichtung nach einem oder mehreren der Ansprüche 1 bis 9 enthält.

## Revendications

1. Dispositif de chauffage qui comprend un ou plusieurs éléments chauffants (13a),
dans lequel l'élément chauffant ou chaque élément chauffant (13a) inclut une première électrode (14), une seconde électrode (15), et un matériau ayant un effet CTP (16) fixé au moins en partie entre les deux électrodes (14, 15),
dans lequel le matériau présentant un effet CTP est un matériau moulable à base de plastique ou à base de polymère,
**caractérisé en ce que** :
- le matériau ayant un effet CTP est un matériau moulable à base de plastique ou à base de polymère qui comprend un mélange de polymères incompatibles ou immiscibles, incluant au moins deux polymères immiscibles, combinés afin d'obtenir un composite co-continu, et
dans lequel au moins un des polymères du mélange présente une température de fusion qui ne peut pas être atteinte après un chauffage induit via une alimentation électrique du dispositif de chauffage (3).

2. Dispositif de chauffage selon la revendication 1, dans lequel le mélange comprend au moins un polymère ionomère, tel qu'un copolymère thermoplastique à base d'éthylène avec des monomères greffés à la chaîne polymère contenant des groupes carboxyle partiellement neutralisés par des ions de métal.

3. Dispositif de chauffage selon la revendication 1, dans lequel le mélange comprend un polypropylène dans un pourcentage de 39 % à 44,5 %, un ionomère dans un pourcentage de 40 % à 44,5 %, et un additif conducteur ou un noir de carbone dans un pourcentage de 11 % à 20%.

4. Dispositif de chauffage selon la revendication 1, comprenant un corps de support (5) et plusieurs éléments chauffants (13a) dans le corps de support (5), de sorte que le dispositif de chauffage comprend un nombre desdites premières électrodes (14) et un nombre desdites secondes électrodes (15),
dans lequel les premières électrodes (14) respectivement les secondes électrodes (15), sont disposées mutuellement espacées dans le corps de support (5), avec les premières électrodes (14) généralement parallèles et faisant face aux secondes électrodes (15).

5. Dispositif de chauffage selon la revendication 1, dans lequel les premières électrodes (14) sont connectées à un premier élément conducteur électrique commun (17) et les secondes électrodes (15) sont connectées à un second élément conducteur électrique commun (18), de telle manière que les éléments chauffants (13a) des plusieurs éléments chauffants (13a) sont électriquement connectés en parallèle via le premier élément conducteur électrique commun (17) et le second élément conducteur électrique commun (18).

6. Dispositif de chauffage selon la revendication 4 ou 5, dans lequel le corps de support (5) présente une paroi périphérique (8), et les premières électrodes (14), respectivement les secondes électrodes (15), sont distribuées selon une configuration généralement annulaire, en particulier le long d'une direction de périmètre de la paroi périphérique (8) du corps de support (5).

7. Dispositif de chauffage selon la revendication 6, dans lequel la paroi périphérique (8) du corps de support (5) présente une forme avec un profil de périmètre fermé, les premières électrodes (14) et les secondes électrodes (15) sont substantiellement plates, et les éléments chauffants (13a) des plusieurs éléments chauffants sont fixés de manière angulaire les uns par rapport aux autres et à une distance angulaire les uns des autres dans une direction de périmètre de la paroi périphérique (8).

8. Dispositif de chauffage selon la revendication 1, dans lequel le corps de support (5) présente plusieurs premières parois (8) qui s'élèvent à partir d'une paroi commune (7), dans chacune desdites premières parois (8) au moins un élément chauffant des plusieurs éléments chauffants (13a) étant au moins partiellement intégré.

9. Dispositif de chauffage selon la revendication 8, dans lequel lesdites premières parois (8) sont connectées ensemble pour former une paroi tubulaire unique.

10. Dispositif de chauffage selon l'une quelconque des revendications précédentes, dans lequel le corps de support (5) appartient à un constituant (1) d'un véhicule à moteur, en particulier d'un réservoir de combustible de véhicule à moteur et/ou d'un système pour le traitement de gaz d'échappement d'un moteur à combustion interne.

11. Système de gaz d'échappement de moteur à combustion interne, comprenant un système pour l'injection d'un additif liquide réducteur (2) introduit par un réservoir (1), dans lequel le réservoir (1) comprend un constituant de réservoir (3) qui inclut un dispositif de chauffage selon l'une ou plusieurs des revendications 1 à 9.
